# EUROPÄISCHE PATENTANMELDUNG

(11) **EP 3 489 181 A1**
(43) Veröffentlichungstag der Anmeldung: **29.05.2019**
(21) Anmeldenummer: 18207819.6
(22) Anmeldetag: 22.11.2018
(51) Int. Cl.: B65H 31/30

(54) **TRENNELEMENT FÜR DEN BETRIEB EINER TRANSPORTEINRICHTUNG**

(30) Priorität: 28.11.2017 CH 14452017
(71) Anmelder: Müller Martini Holding AG, 6052 Hergiswil (CH)
(72) Erfinder: Landolt, Michael, 6260 Reiden (CH); Braschoss, Peter, 4800 Zofingen (CH)

(57) **Zusammenfassung**

Die Erfindung betrifft ein Trennelement für den Betrieb einer Transporteinrichtung (100), welche für die Stapelung mehrerer Teilbuchblocks zur Bildung eines Buchblocks (BB) entlang eines zur Transporteinrichtung gehörenden Buchkanals (200) ausgebildet ist. Der fertig gestapelte Buchblock wird anschliessend einer Bearbeitungsmaschine (BM) zugeführt. Der Buchkanal (200) besteht aus mindestens einer Überführungsstrecke (UEF-1, UEF-2, UEF-3), mindestens ein erstes Trennelement (TE-1) innerhalb der Transporteinrichtung (100) als Bindeglied zwischen einer vorangehend angeordneten Überführungsstrecke (UEF-1) und einer nachgeordneten Überführungsstrecke (UEF-2). Das mit mindestens einem Antrieb betreibbare erste Trennelement (TE-1) übernimmt einen von der vorangehenden Überführungsstrecke (UEF-1) flach zugeführten Teilbuchblock, dieser wird flach über die von dem ersten Trennelement (TE-1) gebildete Förderungsstrecke weitertransportiert und anschliessend flach und taktkonform an die nachgeschaltete Überführungsstrecke (UEF-2) übergeben.

## Beschreibung

### Technisches Gebiet

Die Erfindung betrifft mindestens ein erstes Trennelement innerhalb einer Transporteinrichtung, wobei das Trennelement die gestapelten flach aufeinander liegenden Teilbuchblocks weiterbefördert. Des Weiteren betrifft die Erfindung auch mindestens ein im Nachgang zu dem ersten Trennelement entlang derselben Transporteinrichtung angeordnetes zweites Trennelement, welches die fertig gestapelten Teilbuchblocks auf ihren Buchrücken liegend zu einer nachgeschalteten Bearbeitungsmaschine weitertransportiert, gemäss Oberbegriff eines der Ansprüche 1 oder 2.

### Stand der Technik

Aus CH545738 geht eine Vorrichtung zum Zusammentragen, Fördern und Binden von Artikeln hervor, welche Vorrichtung die Speicherung der vom ersten Förderorgan gelieferten Artikel und zur Weitergabe derselben in einem bestimmten zeitlichen Verhältnis zum zweiten Förderorgan übernimmt, wobei die Speichervorrichtung mit einem Getriebe versehen ist, welches erste Mittel zum Antreiben des Getriebes mittels des ersten Motors sowie zweite Mittel zum Antreiben mittels des zweiten Motors enthält, und die Speichervorrichtung wahlweise vom ersten oder vom zweiten Motor antreibbar ist. Des Weiteren betrifft diese Vorrichtung auch ein Verfahren zum Betrieb der genannten Vorrichtung, wobei der Zusammentragmaschine so lange Signaturen zugeführt wird, bis ein Fehler auftritt, und darauf die Zusammentragmaschine angehalten wird, um den Fehler zu korrigieren, während man weiterhin in der Zusammentragmaschine gespeicherte Signaturen der Überführungsförderkette zuführt, bis alle gespeicherten Signaturen der Bindemaschine zugeführt sind. Die Zufuhr wird von der Überführungsförderkette angehalten, während man die Bindemaschine weiterlaufen lässt, dergestalt, dass die Überführungsförderkette mit der angehaltenen Zusammentragmaschine synchron startet, um dann die Signaturen von der Zusammentragmaschine der Überführungsförderkette zuzuführen, während die beiden auf die vorgesehenen Geschwindigkeiten gebracht werden. Zwischen der Zusammentragmaschine, der Überführungsförderkette und der Bindemaschine wird Synchronlauf hergestellt, bevor man die der Überführungsförderkette übergebenen Signaturen der Bindemaschine zugeführt werden.

Aus DE2231955 geht eine Überführungs- resp. Transportanlage zum Überführen von Signaturen von einer Druckerpresse in ein Bindegerät hervor, insbesondere eine synchron arbeitende Anlage aus Druckerpresse und Bindegerät, bei welcher die Presse kontinuierlich betrieben wird, sowohl während das Bindegerät erneut angefahren als auch während es synchron mit der Presse betrieben wird.
Aus dieser Druckschrift geht des Weiteren hervor, dass eine Überführungsanlage geschaffen ist, welche geeignet ist, gesammelte bzw. zusammengetragene Signaturen von einer kontinuierlich arbeitenden Druckerpresse einem synchron arbeitenden Bindegerät zuzuführen. Die Überführungsanlage zum Überführen der Signaturen ist mit Synchronmittel versehen, welche der Druckerpresse, das Bindegerät und die Überführungsförderer in Synchronlauf betätigen, und welche mit einer Auslenkvorrichtung versehen sind, um die Signaturen bei Anhalten des Bindegeräts von der Fördervorrichtung auszulenken. Die Überführungsanlage weist des Weiteren eine Vorrichtung auf, welche automatisch den Synchronlauf des Bindegeräts mit der Anlage herbeiführt, wenn das Bindegerät wieder in Betrieb genommen wird.
Ferner weist diese Druckschrift auf ein Verfahren hin, bei welchem zum Überführen zusammengetragener Signaturen aus einer die Signaturen zusammentragenden Presse in ein Bindegerät zu schaffen.

### Darstellung der Erfindung

Der Erfindung, wie sie in den Ansprüchen gekennzeichnet ist, liegt die die Aufgabe zugrunde, ein Trennelement, auch Übergabeelement genannt, vorzuschlagen, welches mit Überführungsmitteln ausgestattet und in der Lage ist, die über eine vorangehende Überführungsstrecke zugeführten Teilbuchblocks oder allgemein Buchblockprodukte unabhängig ihrer vorgegebenen Lage zu erfassen und weiterzubefördern, und anschliessend taktkonform an eine nachfolgende Überführungsstrecke zu übergeben, wobei diese segmentiert zueinander betrieben werden, was zu einer vorteilhaften Betriebsautonomie führt.

Die nacheinander eingebrachten losen Teilbuchblocks werden zunächst formschlüssig flach aufeinander liegend in einen ebenfalls flach verlaufenden Buchkanal (Liegendkanal) eingebracht, wobei sich diese Technik grundsätzlich von derjenigen unterscheidet, bei welcher die Buchblocks durchwegs entlang eines "Stehendkanals", also auf den Buchrücken liegend, transportiert werden. Grundsätzlich wird der Buchkanal durch eine Reihe von vorzugsweise aufeinanderfolgenden Überführungsstrecken gebildet. Erst am Schluss wird das flach transportierte und fertig zusammengefügte Buchblockprodukt für die Belange der anschliessenden Bearbeitungsmaschine in eine andere Lage überführt.

Damit herrscht bei der Dynamik der Stapelung, also des sogenannten Eintaktens, eine Neigungsinterdependenz zwischen den beiden Aggregaten, Buchkanal/Bogenstapelzuführungstisch, dergestalt, dass der Bogenstapelzuführungstisch über eine Serie von Transportbändern verfügt, welche das Eintakten der Bogenstapel gewährleisten, und dass der Transport des Teilbuchblocks im Buchkanal so durchgeführt wird, dass die Stapelung durch eine Fingerkette erfolgt, welche interdependent zwischen Bogenstapelzuführungstisch und Buchkanal agiert, und so die Förderung des jeweiligen Produkts aufrecht erhält.

Es liegt auf der Hand, dass bei einem solchen umfassenden Betrieb mindestens zwei Trennelemente vorgesehen sind, welche mit den Überführungsstrecken dynamisch in Wirkverbindung stehen, d.h. es soll die Übergabe des jeweiligen Teilbuchblocks von einer Überführungsstrecke zur anderen sichergestellt werden, nicht ausgeschlossen kontinuierlich, aber in den meisten Fällen wohl diskontinuierlich.

Das Trennelement bildet für den flach liegenden Transport der Buchblockprodukte eine wesentliche Komponente, dies in dem Sinne, dass das Trennelement allgemein in Produktionsrichtung sozusagen als Brücke, als Bindeglied, zwischen einer vorangehenden Überführungsstrecke und einer nachfolgenden Überführungsstrecke fungiert, wobei die fokussierte Transporteinrichtung, wie erwähnt, auch mehrere Trennelemente aufweisen kann.

Das durch einen Servomotor angetriebene Trennelement bewerkstelligt, dass die Buchblockprodukte von einer in der ersten Überführungsstrecke operierenden Fingerkette in die Fingerkette der zweiten nachgeschalteten Überführungsstrecke übergeben werden können.

Die Fingerkette des Trennelements greift grundsätzlich die Buchblockprodukte aus dem Transport entlang einer vorangehenden Überführungsstrecke auf, diese Buchblockprodukte werden dann von der Fingerkette über die durch das Trennelement definierte Transportstrecke weiter befördert, und anschliessend werden diese Buchblockprodukte dann taktgenau an eine nachgeschaltete Überführungsstrecke übergeben.

Durch die verschiedenen Kettenteilungsmöglichkeiten ist der Servomotor in der Lage, mehrfach verschiedene Geschwindigkeitsprofile fahren zu können, wobei der Servomotor vorzugsweise nach abgelegten Steuerungsprofilen gesteuert wird. Dessen ungeachtet, es stehen auch Steuerungsprofile zur Verfügung, welche adaptiv oder prädiktiv die Steuerung des Systems innerhalb der Trennelemente betreiben können.

Einerseits werden die Teilbuchblocks formschlüssig aufeinander gestapelt, andererseits erfolgt deren Transport entlang des Buchkanals vollkommen subsequent zueinander, also strebt der Abstand zwischen den einzelnen Teilbuchblocks und später bei fertig konfektionierten Buchblockprodukte in Produktionsrichtung gegen Null, d.h. die Buchblockprodukte allgemein stossen quasi aneinander auf, d.h. eine Format- und Dickenabhängigkeit hat keinen Einfluss auf die Beabstandung der Buchblockprodukte in Produktionsrichtung zueinander. Dies hat den wesentlichen Vorteil, dass eine Umrüstung bei der Produktion unterschiedlicher Buchblockprodukte nicht notwendig ist.

Allenfalls sind die Steuerungsprofile in der Lage, das Bewegungsprofil innerhalb der ganzen Transporteinheit nach dem Produktformat auszurichten, d.h. beispielsweise bei kürzeren Produktlängen können die intermediären Beschleunigungen in Produktionsrichtung reduziert werden.

Vorteilhaft sollen die im Trennelement operierenden Mitnehmerfinger eine ihr zugeordnete in engen Grenzen gehaltene Lage einnehmen, damit während ihres Einsatzes im Umfeld der Buchblockprodukte eine dynamisierte Schwenkbewegung ausgeschlossen bleibt.

Ein weiterer wesentlicher Vorteil der Erfindung ist darin zu sehen, dass durch die liegend geführten Buchblockprodukte innerhalb des Trennelements sowie vor und nach demselben eine echte technologische Bereicherung gegenüber den bekanntgewordenen Transporteinrichtungen stattfindet.

Darüber hinaus müssen auch nicht innerhalb solcher Trennelemente Einstellungen auf Grund der unterschiedlichen Formate dieser Buchblockprodukte vorgenommen werden. Demgemäss kann auch durch den Antrieb des eingesetzten Servomotors im Trennelement erreicht werden, dass auf einen Austausch mechanischer Übersetzungen bei verschiedenen Teilungen der Fingerketten verzichtet werden kann.

Die Erfindung hat deshalb zum Ziel, auf mehrere individuell gestaltete Trennelemente zu setzen, welche für den Betrieb einer Transporteinrichtung zur Verfügung stehen, und welche für die Stapelung mehrerer Teilbuchblocks zur Bildung eines Buchblocks oder allgemein eines Buchblockprodukts entlang eines zur Transporteinrichtung gehörenden Buchkanals so ausgebildet ist, dass der fertig gestapelte Buchblock anschliessend nach vorbestimmten Kriterien einer Bearbeitungsmaschine zugeführt werden kann.

Wie bereits summarisch dargelegt, übernimmt das mit mindestens einem Antrieb betreibbare erste Trennelement einen von der vorangehenden Überführungsstrecke flach zugeführten Teilbuchblock, dieser wird dann flach über die durch das erste Trennelement gebildete Förderungsstrecke weitertransportiert, und anschliessend flach und taktkonform an die nachgeschaltete Überführungsstrecke übergeben.

Dabei wird vorgesehen, dass ein mit mindestens einem eigenständigen Antrieb nachgeschaltetes zweites Trennelement einen von der vorangehenden Überführungsstrecke bereits stehend ausgerichteten Teilbuchblock ebenfalls übernimmt, diesen über die von dem zweiten Trennelement gebildete Förderungsstrecke stehend weitertransportiert, und anschliessend stehend und taktkonform an die nachgeschaltete Überführungsstrecke übergebt, wobei diese letztgenannte Überführungsstrecke der Bearbeitungsmaschine vorgeschaltet ist. Damit wird durch diese Ausführungen hervorgehoben, dass die Transporteinrichtung verschiedene Trennelemente beinhaltet, welche zwar grundsätzlich die gleiche Überführungsstrategie erfüllen, aber in sich, was die Art des Weitertransports der einzelnen Teilbuchblocks betrifft, verschiedene Ansätze verfolgen.

Insbesondere die zum Einsatz vorgesehenen Trennelemente als Bindeglied zweier Überführungsstrecken weisen entlang ihrer Förderungsstrecken für den Transport der Teilbuchblocks eine integral durchgehende oder segmentierte Fingerkette auf, welche ihrerseits Mitnehmerfinger aufweist, die zunächst für den flach geführten Teilbuchblock eine vertikale oder quasi-vertikale Ausrichtung haben. Sobald diese flach geführten Buchblockprodukte allgemein in eine stehend geführte Lage überführt werden, so gilt ab Beginn dieser neuen Lage die Maxime, dass die Mitnehmerfinger eine horizontale oder quasi-horizontale Ausrichtung aufweisen müssen, und das gilt insbesondere für das zweite oder letzte Trennelement vor der Bearbeitungsmaschine.

Zu diesem Zweck wird vorzugsweise nach dem Betrieb einer letzten auf Flachzuführung ausgelegte Bogenstapelzuführungseinheit eine Überleitungsstrecke vorgesehen, innerhalb welcher das dort eingeleitete Buchblockprodukt von einem flach liegenden Transportzustand in einen stehend geführten Transport überführt wird. Wird also im Nachgang dieser Überleitungsstrecke ein zweites oder weiteres Trennelement angeordnet, das bisweilen innerhalb der dargestellten Transporteinrichtung als letztes Trennelement vor der Bearbeitungsmaschine fungiert, so werden ebendiese Buchblockprodukte allgemein über dessen Förderungsstrecke stehend geführt.

Mit dieser Massnahme lässt sich erreichen, dass die nach dem letzten Trennelement angeordnete Überführungsstrecke äusserst kurz gehalten werden kann, weil die Buchblockprodukte somit bereits jene Lage aufweisen, welche die für die Bearbeitungsmaschine vorbestimmt ist, womit weitere diesbezügliche Dispositionen nicht mehr getroffen werden müssen.

Daraus geht vorrichtungsmässig nun hervor, weshalb das letzte Trennelement durch eine andere Führung der Mitnehmerfinger gegenüber einem vorangehenden Trennelement charakterisiert ist.

Die Förderung der zu stapelnden Teilbuchblocks oder des fertig gestapelten Buchblocks über das erste und/oder zweite Trennelement wird taktmässig monoton, synchron oder diskontinuierlich gegenüber dem Takt der den Trennelementen vorangehenden und nachfolgenden Überführungsstrecken geführt, damit kommt klar zum Ausdruck, dass diese Trennelemente in sich eine ordnende Funktion auf einen möglichen diskontinuierlichen Takt beim Transport der Buchblockprodukte entlang der übrigen Überführungsstrecken der Transporteinrichtung ausüben

Die Anordnung der Trennelemente innerhalb der Transporteinrichtung erfüllen sodann weitere ordnende Funktionen, welche mit der Stapelung der Teilbuchblocks im Zusammenhang stehen: Zur Sicherstellung der transportbedingten ordnenden Funktion der Trennelemente sind diese innerhalb der Transporteinrichtung so angeordnet, dass die vor- oder nachgeschaltete Überführungsstrecke mindestens mit einer Bogenstapelzuführungseinheit und/oder mindestens einem ZTM-Anleger bestückt ist, wobei die ordnende Funktion der Trennelemente gewichtig dann in Funktion tritt, wenn die Zuführung der zu stapelnden Teilbuchblocks gegenüber einer vorgegebenen Überführungsstrecke sowohl vertikal als auch seitlich gegenüber der Produktionsrichtung der Transporteinrichtung vorgesehen ist, d.h., in diesen Fällen müssen die Trennelemente für die potentiell auftretenden Imponderabilien bei der Zuführung und Weitertransport der Buchblockprodukte ordnend eingreifen.

Wird die seitliche Zuführung des jeweils zu stapelnden Teilbuchblocks zugrunde gelegt, so greift die Steuereinheit durch gezielte Steuerungsbefehle ein, um eine angepasste Höhenverstellung der Bogenstapelzuführungseinheit gegenüber der festgestellten vorhandenen Höhe des sich in der Überführungsstrecke flach ankommenden Teilbuchblocks vorzunehmen (siehe oben). Bei dieser Vorgehensweise kann es leicht zu taktmässigen Unregelmässigkeiten kommen, welche dann von den Trennelementen leicht "ausgebügelt" werden können.

Des Weiteren haben die Trennelemente bei Bedarf eine Ausrichtung der transportierten Buchblockprodukte innerhalb der Förderstrecke derselben vorzunehmen. Zwar ist es richtig, dass insbesondere die flachtransportierten Buchblockprodukte eine stabilisierende lageerhaltende Neigung innerhalb der Überführungsstrecken aufweisen, welche bis zu 30°, vorzugsweise 20° ± 5°, vorzugsweise bis 10° definiert ist, aber dessen ungeachtet, es können selbst bei dieser lageerhaltenden Neigung zu Unregelmässigkeiten kommen, welche mit den Beschleunigungen oder Verzögerungen der Buchblockprodukte innerhalb des Transports und der Stapelbildung zu tun haben können, und diesbezüglich wird von den Trennelementen Remedur geschaffen, sodass die Buchblockprodukte mindestens nach dem Durchlauf des entsprechenden Trennelements "beruhigt" sind, auch weil die Geschwindigkeitsprofile innerhalb der Trennelemente stabil sind und losgelöst von den übrigen Geschwindigkeiten der Transportelemente der Transporteinrichtung agieren.

Was die Transporteinrichtung betrifft, wird hervorgehoben, dass deren Betrieb zwar in Wirkverbindung mit den erläuterten Trennelementen steht, dessen ungeachtet weist aber diese Transporteinrichtung wesentliche Elemente auf, welche für den Betrieb auch eine wesentliche Rolle spielen, damit die Voraussetzungen geschaffen werden können, dass das Buchblockprodukt taktgenau und lagekonform in eine anschliessende Bearbeitungsmaschine überführt werden kann.

Die in Stapellaufrichtung von einer ersten Bogenstapelzuführungseinheit beigebrachten losen Teilbuchblocks, beispielweise aus Digitaldruck- oder Nichtdigitaldruckprodukten bestehend, werden über einen anschliessenden ZTM-Anleger geführt, wo zusätzliche Einzelblätter oder Bogen hinzukommen. Gilt die buchblockgemässe Stapelung nach diesem ZTM-Anleger als abgeschlossen, so wird dieses Buchblockprodukt einem Klebebinder, einer Fadenheftmaschine oder einer anderen Bearbeitungsmaschine für die weitere Bearbeitung zugeführt.

Soweit aber diese Stapelung von Teilbuchblocks noch nicht als abgeschlossen gilt, wird im Nachgang zu dem ZTM-Anleger eine weitere Bogenstapelzuführungseinheit vorgesehen, über welche das lose bis anhin gebildete Buchblockpaket mit weiteren Teilbuchblocks ergänzt wird.

Wenn von losen Teilbuchblocks die Rede ist, so schliesst dies nicht aus, dass Teile davon bei Bedarf für die intertemporäre Buchblockbildung mindestens rückenseitig durch ein Klebeverfahren gezielt fixiert werden.

Schon aus diesen summarischen Ausführungen geht demnach hervor, dass die Bildung des aus verschiedenen Teilbuchblocks gebildeten Endbuchblocks (Buchblockprodukt) an sich sorgfältig vonstattengehen muss, will man sicherstellen, dass das fertig gestapelte Buchblockprodukt auf dem Weg zu einer nachgeschalteten Bearbeitungsmaschine seine Stapelungshomogenität beibehält, womit beim Einführung dieses Buchblockprodukts in die nachfolgende Bearbeitungsmaschine, beispielsweise Klebebinder, Fadenheftmaschine, etc., keine diesbezüglichen weiteren Ausrichtungsmassnahmen mehr vorgenommen werden müssen.

An sich lässt sich die Transporteinrichtung für den liegenden Transport der Teilbuchblocks oder Buchblockprodukte durch weitere ZTM-Anleger und/oder Bogenstapelzuführungseinheiten ergänzen, deren Abrufung für das jeweilige Buchblockprodukt integral oder nur punktuell erfolgt, d.h., bei Bedarf können solche Stationen bei der Bildung des Buchblockprodukts einfach übersprungen werden.

Beim Betrieb einer solchen für den liegenden Transport der Teilbuchblocks ausgebildeten Transporteinrichtung zur Bildung eines Endbuchblocks über mehrere Zuführungsstationen (Bogenstapelzuführungseinheiten, ZTM-Anleger, etc.) müssen dann weitere Vorkehrungen geschaffen werden, welche sicherstellen, dass der Betrieb kontinuierlich abgewickelt werden kann.

Beispielsweise werden für den liegenden Transport der Buchblockprodukte aus Überführungsstrecken ausgebildeten Buchkanals in Produktionsrichtung Bogenstapelzuführungseinheiten, ZTM-Anleger, Trennelemente, vorgesehen, welche einheitlich oder beliebig angeordnet sind. Eine typische Förderkontinuität kann darin bestehen, dass nach einer ersten Bogenstapelzuführungseinheit einen ersten ZTM-Anleger angeordnet ist, worauf bereits ein erstes Trennelement wirkt. Die nachfolgende Förderkontinuität kann sich nach dieser Platzstellung wiederholen oder die Reihenfolge kann beliebig gestaltet sein, wobei die Zuführungselemente einzeln oder in Kombination zueinander in der Regel einer eigenständig operierenden Überführungsstrecke zugeordnet sind.

Das bedeutet im konkreten Fall, dass nach einer ersten Überführungsstrecke, welche sich über die erste Bogenstapelzuführungseinheit und den ZTM-Anleger erstreckt, bereits ein erstes autonom und interdependent betreibbares Trennelement vorgesehen werden sollte, sollen die nachfolgenden Aggregate nach Takt beliefert werden.

Wenn von einem autonom und interdependent betreibbaren Trennelement die Rede ist, so wird damit hervorgehoben, dass seine Funktion eindeutig darin besteht, die bis anhin gebildeten losen und liegend angeordneten Teilbuchblocks von einer vorangehenden zu einer nachgeschalteten Transportstrecke kontinuierlich und formschlüssig, aber nicht zwingend mit dem vorangehenden Betrieb takteinhaltend zu fördern.

Andererseits ist dieses Trennelement auch in der Lage, die Überführung des Buchblockprodukts von einer vorangehenden zu einer nachfolgenden Transportstrecke förderungstechnisch zu trennen, dergestalt, dass die beiden Strecken dann autonom betrieben werden können.

Wenn das Trennelement also die Funktion erfüllen muss, das Buchblockprodukt von einer vorangehenden zu einer naschgeschalteten Transportstrecke zu fördern, so müssen Vorkehrungen getroffen werden, um das Trennelement in die Lage versetzen zu können, je nach Bedarf, verschiedene Geschwindigkeitsprofile zu fahren. Dabei soll nicht nur die Taktvorgabe über die verschiedenen Transportstrecken, sondern auch die Produktlängen und allenfalls auch die weitere Beschaffenheit (Papierstruktur, etc.) der losen Teilbuchblocks berücksichtigt werden.

Demnach besteht die Infrastruktur der Transporteinrichtung aus einer Transportstrecke, welche im Normalfall durch folgende Elemente bestückt ist, nämlich:
i) aus einer ersten Überführungsstrecke, welche in Wirkverbindung mit einer ersten Bogenstapelzuführungseinheit und einem ersten ZTM-Anleger steht; ii) aus einem ersten Trennelement, das der ersten Überführungsstrecke nachgeschaltet ist; iii) aus einer dem ersten Trennelement folgenden zweiten Überführungsstrecke, welche in Wirkverbindung mit einer zweiten Bogenstapelzuführungseinheit steht; iv) aus einem zweiten Trennelement, das der zweiten Überführungsstrecke nachgeschaltet ist; v) aus einer dritten Überführungsstecke, welche spätestens hier die lagemässige Infrastruktur des Buchblocks für die anschliessende Bearbeitungsmaschine bereitstellt.

Ausgehend von einer solchen Transportstrecke, welche nicht als abschliessend zu betrachten ist, lassen sich die folgenden Gegenstände und Betriebsarten erkennen, welche die Erfindung selbst bilden:

Eine durchgehende Betriebsart der Transportstrecke besteht demnach darin, dass alle genannten Elemente effektiv und gleichzeitig in Betrieb stehen. Bei dieser Betreibungsart muss aber die Konsistenz der einzelnen Teilbuchblocks nicht zwingend uniform sein, d.h., obwohl alle Zuführungselemente zur Bildung eines fertigen Buchblockprodukts für eine nachgeschaltete Bearbeitungsmaschine beitragen, können ihre spezifischen Anteile zum jeweiligen fertigen Buchblock verschieden sein, oder intermediär bei einzelnen Zuführungselementen sogar gegen Null streben oder Null sein.

Dies ist zum Beispiel dann der Fall, wenn über den ZTM-Anleger nicht vollumfänglich alle möglichen Einzelblätter oder Bogen abgezogen werden, welche an sich möglich wären.

Es liegt auf der Hand, dass bei einem solchen umfassenden Betrieb mindestens zwei Trennelemente vorgesehen sind, welche mit den Überführungsstrecken dynamisch in Wirkverbindung stehen, d.h. es soll die Übergabe des jeweiligen Teilbuchblocks von einer Überführungsstrecke zur anderen sichergestellt werden, nicht ausgeschlossen kontinuierlich, aber in den meisten Fällen wohl diskontinuierlich.

Eine erste gezielt eingeschränkte Betriebsart besteht darin, dass die erste Überführungsstrecke mit ihren Bogenstapelzuführungseinheit und/oder ZTM-Anleger gebypasst wird, und erst die zweite Bogenstapelzuführungseinheit in Funktion tritt, womit auch das erste Trennelement ausser Betrieb steht. Indessen, dies ist nicht absolut zu betrachten, denn es können intermediär nach Bedarf bei der Ablieferung verschiedener aufeinanderfolgender Teilbuchblocks die genannten nicht unmittelbar in Betrieb stehenden Elemente punktuell aktiviert werden, punktuell lässt sich also jederzeit zu einem durchgehenden Betrieb übergehen.

Eingeschränkt ist der Betrieb auch dann, wenn zwar die erste Bogenstapelzuführungseinheit nicht im Betrieb ist, wohl aber der ZTM-Anleger. Bei einem solchen Betrieb ist dann das erste Trennelement voll operativ, welches dafür sorgt, dass die abgezogen Einzelblätter oder Bogen vom ZTM-Anleger auch diskontinuierlich übernommen und lage- und taktkonform der zweiten Überführungsstrecke übergeben werden können, wo sie dann mit dem Beitrag aus der zweiten Bogenstapelzuführungseinheit ergänzt werden können. Es liegt auf der Hand, dass die Aktivierung dieser Bogenstapelzuführungseinheit unmittelbar auf den Betrieb des zweiten Trennelements kinematisch-operative Wirkungen auslöst, welche weiter unten beschrieben werden.

Eine quasi-durchgehende Betriebsart ist zum Beispiel dann gegeben, wenn die zweite Bogenstapelzuführungseinheit keinen Beitrag leistet und deshalb temporär oder durchgehend ausser Betrieb steht. Damit kann der Betrieb der Überführungsstrecke ab dem ersten Trennelement für die nachfolgenden Zuführungselemente durchgehend im Takt betrieben werden, d.h., das zweite Trennelement fördert die Buchblocks monoton, synchron gegenüber dem von der zweiten Überführungsstrecke vorgegeben Takt zu der dritten Überführungsstrecke als Überleitung zu der Bearbeitungsmaschine weiter.

Eine solche unterteilte Transportstrecke hat auch den Vorteil, dass jederzeit Teilbuchblocks aus dem Durchlauf abgezweigt werden können, beispielsweise nach dem ersten Trennelement und/oder nach dem Beitrag aus dem ZTM-Anleger. Diese Eingriffe können durch verschiedene Vorgaben motiviert sein, beispielsweise, wenn die Steuerung wegen festgestellter Qualitätsmängel eingreift und das Produkt vorweg ausscheidet, oder wenn die Steuerung diese Abzweigung aktiv disponiert, weil beispielsweise das Produkt einer anderen Bearbeitungsmaschine zugeführt werden soll.

Daraus lässt sich erkennen, dass gerade durch die beschriebene Unterteilung der Transporteinrichtung in verschiedene Überführungsstrecken und Zuführungselemente eine grosse operationelle Flexibilität resultiert.

Eine solche auf Unterteilung ausgelegte Transporteinrichtung hat auch den Vorteil, dass vorweg kundenspezifische Anlagen angeboten werden können, welche für den Kunden den Vorteil haben, dass sie jederzeit mindestens mit den beschriebenen Elementen und Aggregaten leicht erweitert werden können.

Eine solche so aufgebaute Transporteinrichtung hat auch den Vorteil, dass einzelne zusätzliche buchblockmässige Zuführungen nicht zwingend aus der Vertikale stattfinden müssen, sondern ebenso gut seitlich zur Produktionsrichtung vorgenommen werden können, vorausgesetzt, es werden spezielle Vorkehrungen getroffen, welche ebenfalls eine Bereicherung des Standes der Technik bilden.

Sind demnach solche Zuführungen vorgesehen, so muss lediglich sichergestellt werden, dass die Übergabeebene der verschiedenen Teilbuchblocks gegenüber der Transportebene (Buchkanal) der Transporteinrichtung durch entsprechende teilbuchblockführende Bogenstapelzuführungstische höhenverstellbar sind und in maximierter Übereinstimmung mit dem im Buchkanal anstehenden Teilbuchblocks gebracht werden können. Also müssen zum einen Vorkehrungen getroffen werden, welche eine Höhenverstellung nach oben oder unten vorsehen, und zum anderen muss auch noch operationell abgestimmt werden, dass die Übergabe taktkonform oder in Wirkverbindung mit dem im Buchkanal anstehenden Teilbuchblock erfolgt.

Was die Stapelung der flachaufliegenden Teilbuchblocks betrifft, so lässt es sich vorsehen, dass die Stapelung bei der Übergabe von einem Teilbuchblock fliegend stattfinden kann, also nicht zwingend bei ruhendem Betrieb stattfinden kann.

Dabei weist die höhenverstellbare Bogenstapelzuführungseinheit in der Regel drei verschiedene Betriebspositionen auf, nämlich: i) Bei einem Durchlassbetrieb befindet sich die Bogenstapelzuführungseinheit in der obersten Position; ii) Bei einem Einlege-Betrieb befindet sich die Bogenstapelzuführungseinheit in der untersten Position; iii) Bei einem Zulege-Betrieb erfährt die Höhe der Bogenstapelzuführungseinheit eine Anpassung an die Höhe des Teilbuchblocks. Dabei wird disponiert, dass die Zuführung des jeweils zu stapelnden Teilbuchblocks von der Bogenstapelzuführungseinheit und/oder von dem ZTM-Anleger beigestellt und gegenüber der Überführungsstrecke unter einer Neigungsinterdependenz zwischen den beteiligten Aggregaten durchgeführt wird.

Was den Buchkanal der Transporteinrichtung betrifft, so ist dessen Neigung verstellbar. Normal ist die Neigung bis zu 30°, damit das Buchblockprodukt optimal im Kanal transportiert werden kann. In diesem Zusammenhang muss aber berücksichtigt werden, dass die losen Teilbuchblocks, seien sie über den Buchkanal oder die Bogenstapelzuführungstische herangeführt worden, geringe Haftungskoeffizienten aufweisen, und leicht instabil werden und auseinander rutschen können. Aus diesem Grund soll der Bogenstapelzuführungstisch eine Neigung nicht grösser als 10° aufweisen. Dies setzt dann voraus, dass beim Einlege-Betrieb (siehe oben unter iii), mit dem Bogenstapelzuführungstisch möglichst nahe an den Buchkanal gefahren werden soll, weshalb auch mindestens für den letztgenannten vorzugsweise eine Neigung von 10° vorzusehen ist.

Damit herrscht bei der Dynamik der Stapelung, also des sogenannten Eintaktens, eine Neigungsinterdependenz zwischen den beiden Aggregaten, Buchkanal/Bogenstapelzuführungstisch, dergestalt, dass der Bogenstapelzuführungstisch über eine Serie von Transportbändern verfügt, welche das Eintakten der Bogenstapel gewährleisten, und dass der Transport des Teilbuchblocks im Buchkanal so durchgeführt wird, dass die Stapelung durch eine Fingerkette erfolgt, welche interdependent zwischen Bogenstapelzuführungstisch und Buchkanal agiert, und so die Förderung des jeweiligen Produkts aufrecht erhält.

### Kurze Beschreibung der Zeichnung

Nachstehend wird die Erfindung unter Bezugnahme der Zeichnung näher dargestellt. Alle für das unmittelbare Verständnis der Erfindung nicht wesentlichen Elemente sind weggelassen worden. Gleiche Elemente sind in den verschiedenen Figuren mit den gleichen Bezugszeichen versehen.

In der Zeichnung zeigt:
- Figur 1a: eine Transporteinrichtung mit den typischen Elementen;
- Figur 1b: eine weitere Transporteinrichtung mit den typischen Elementen;
- Figur 2a: eine Prinzip-Darstellung über den Aufbau eines ersten Trennelements;
- Figur 3-7: eine Darstellung verschiedener möglicher Produktionsvarianten;
- Figur 8: die kinematischen Abläufe innerhalb eines Trennelements.

### Ausführungsbeispiele der Erfindung

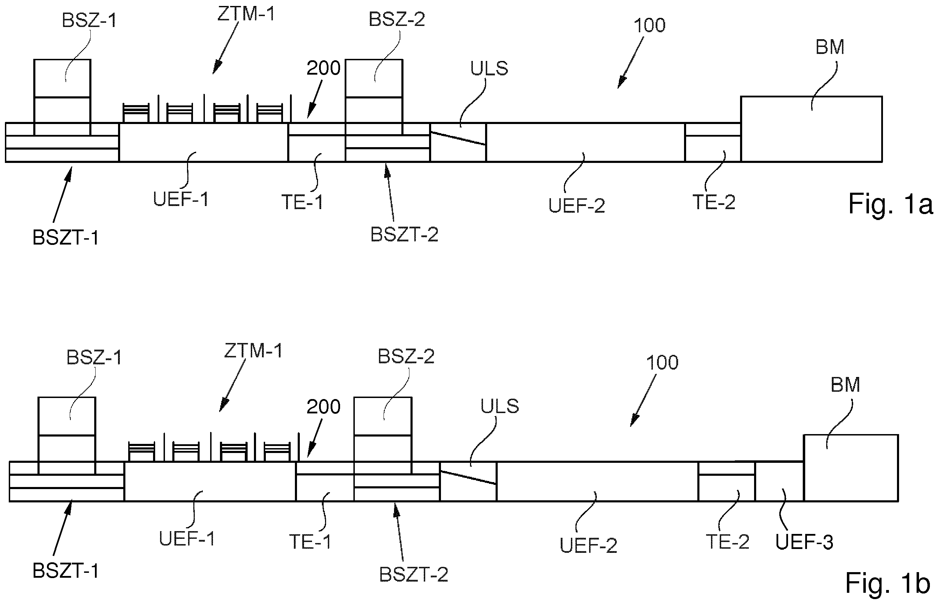

Figur 1a zeigt die Infrastruktur einer Transporteinrichtung 100, welche aus Überführungsstrecken und aus einer Reihe Zuführungselemente gebildeten ist. Zu Beginn der Transporteinrichtung 100 steht eine erste Überführungsstrecke UEF-1, welche mit mindestens einer Bogenstapelzuführungseinheit BSZ-1 und mindestens einem ersten ZTM-Anleger ZTM-1 bestückt ist. In diesem Zusammenhang wird hervorgehoben, dass die Teilbuchblocks zunächst flach aufeinander gestapelt werden, unabhängig davon, aus welcher Ebene diese Zuführung erfolgt. Diese flach gestapelten Teilbuchblocks werden auch in diesem Zustand entlang der Transporteinrichtung 100 in deren Buchkanal 200 befördert, und erst in einer Endphase wird ihre Lage entsprechend den Bedürfnissen einer nachgeschalteten Bearbeitungsmaschine BM angepasst, also werden diese Buchblockprodukte vorzugsweise vor der Bearbeitungsmaschine BM von einem flachliegenden Zustand in eine senkrechte Lage überführt.

Nachgeordnet zu dieser ersten Überführungsstrecke UEF-1 wirkt ein erstes Trennelement TE-1 (auch Übergabeelement genannt), welches einer zweiten Überführungsstrecke UEF-2 vorgeschaltet ist, wobei vorzugsweise zu Beginn dieser zweiten Überführungsstrecke UEF-2 eine zweite Bogenstapelzuführungseinheit BSZ-2 angeordnet ist. Die erwähnte zweite Überführungsstrecke UEF-2 ist mit einer nicht näher dargestellten, Überleitungsstrecke ULS erweitert, welche dafür sorgt, wie bereits erwähnt, dass das dort eingeleitete Buchblockprodukt von einem flach liegenden Transportzustand in einen stehend geführten Transport (auf Buchrücken) überführt werden kann.

Demnach ist es so, dass ein im Nachgang dieser Überleitungsstrecke ULS angeordnetes zweites Trennelement TE-2 bereits mit Buchblockprodukte beliefert wird, welche schon die vorgegebene Buchblocklage für die Verarbeitungsschritte in der Bearbeitungsmaschine BM aufweisen, womit dieses letztangeordnete Trennelement TE-2 seine ursächliche Aufgabe erfüllen kann, nämlich gegenüber Imponderabilien und Störungen bei den angelieferten Buchblockprodukten ordnend einzugreifen, damit die nachgeschaltete Bearbeitungsmaschine BM taktkonform mit Buchblocks in der richtigen Lage angeliefert werden kann. Diese Überleitungsstrecke ULS für die lagemässige Veränderung der Buchblockprodukte soll sonach unbedingt vor dem letzten Trennelement in der Transporteinrichtung angeordnet werden.

Die Figur 1b zeigt eine weitere Transporteinrichtung 100 mit drei Überführungsstrecken UEF-1, UEF-2, UEF-3, zwischen denen jeweils ein Trennelement TE-1, TE-2 als Bindeglied angeordnet ist. Die Figuren 1a und 1b zeigen des Weiteren schematisch auf, dass die Zuführungselemente, insbesondere die Bogenstapelzuführungseinheiten BSZ-1, BSZ-2, in Wirkverbindung mit den schematisch dargestellten Lagen der Bogenstapelzuführungstische BSZT stehen, welche eine Höhenanpassung zwischen den aus den verschiedenen Zuführungselementen zugeführten Teilbuchblocks und der sich bereits im Buchkanal 200 befindlichen Stapelung von Buchblockprodukten vornehmen.

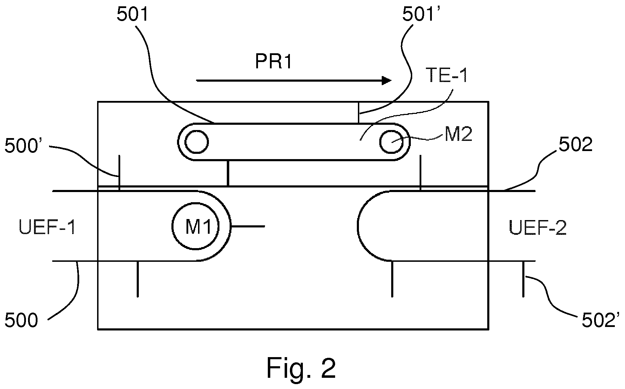

Figur 2 zeigt eine Prinzip-Darstellung über den Aufbau des ersten Trennelements TE-1, welches zwischen der ersten Überführungsstrecke UEF-1 und der zweiten Überführungsstrecke UEF-2 angeordnet ist. Wie dargestellt erfolgt der Antrieb M1, M2 der einzelnen hier ersichtlichen Elemente autonom; eine Abstimmung der Geschwindigkeitsprofile der innerhalb der Transporteinrichtung wirkenden Antriebe M1, M2 lässt sich allenfalls über die Anlagesteuerung erstellen.

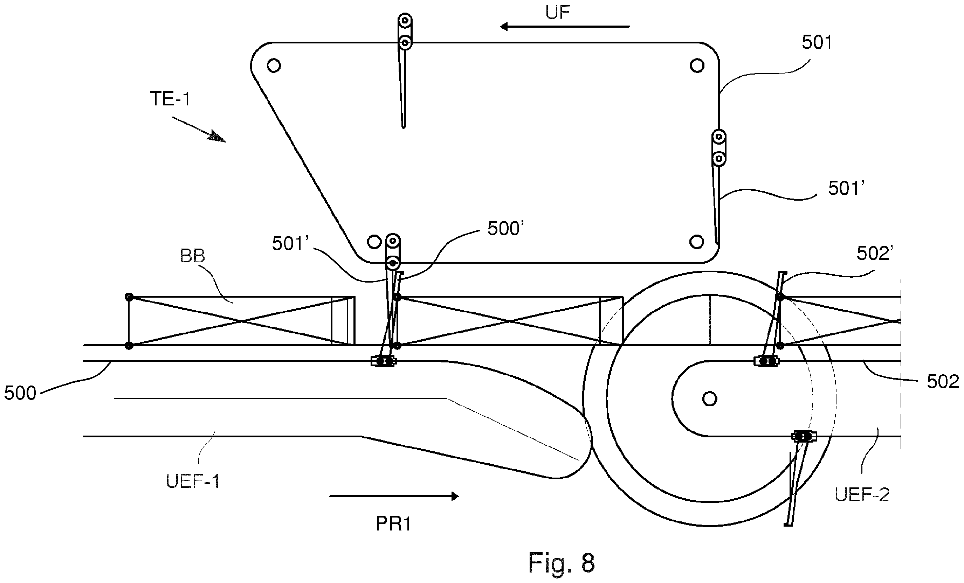

Indessen durch diese Abkoppelung ist das Trennelement TE-1 in der Lage, jederzeit die ihm zugewiesene Aufgabe, nämlich ordnend auf den Fluss der Buchblockprodukte einzuwirken, eigenständig zu erfüllen, um einen von der vorangehenden Überführungsstrecke UEF-1 flach zugeführten Teilbuchblock zu übernehmen, diesen dann flach über die durch das erste Trennelement TE-1 gebildete Förderungsstrecke zu führen, und diesen anschliessend flach und taktkonform an die nachgeschaltete Überführungsstrecke UEF-2 zu übergeben. Ähnliche Überlegungen gelten auch für das weitere Trennelement TE-2. Demnach sind die Trennelemente TE-1, TE-2 mit mindestens einer innerhalb des Trennelements umlaufenden Fingerkette 501 ausgerüstet, welche Mitnehmerfinger 501' aufweist, die entlang der flach geführten Teilbuchblocks eine vertikale oder quasi-vertikale Ausrichtung aufweisen (Fig. 8), während sie entlang der stehend geführten Buchblockprodukte eine horizontale oder quasi-horizontale Ausrichtung aufweisen.

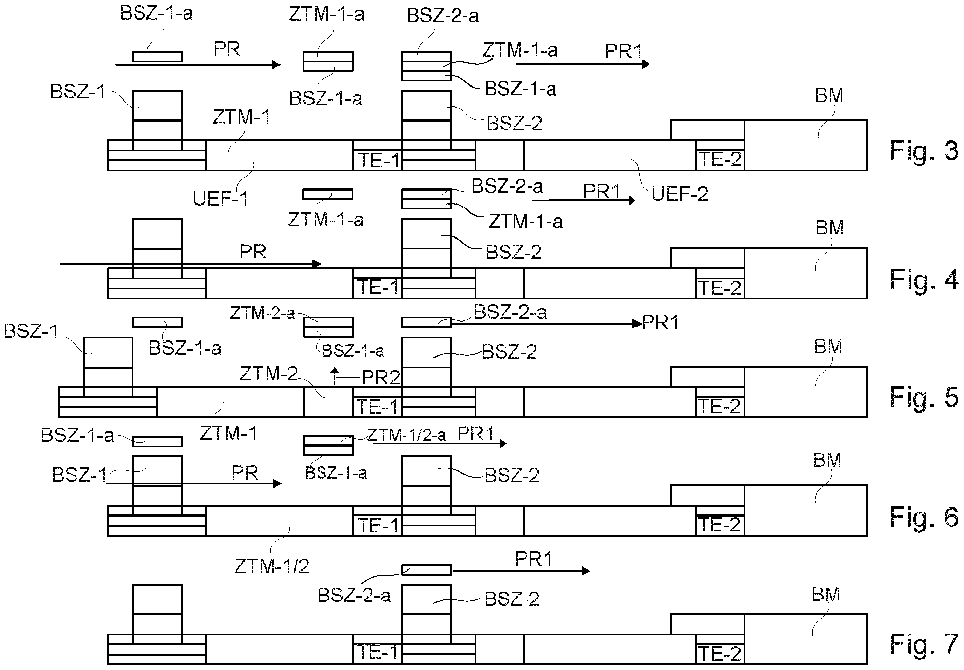

Die Bedeutung der Produktionsrichtung PR1/PR2 wird unter Figuren 3-7 näher erläutert.

Figur 3 zeigt eine erste Produktionsvariante, bei welcher der Endbuchblock aus einem ersten Teilbuchblock BSZ-1-a besteht, welcher von der ersten Bogenstapelzuführungseinheit BSZ-1 beigestellt wird. Gestapelt wird dieser dann subsequent mit einem zweiten Teilbuchblock ZTM-1-a aus dem ZTM-Anleger ZTM-1, und anschliessend kommt noch zur Bildung eines Endbuchblocks eine weitere Zuführung BSZ-2-a aus der zweiten Bogenstapelzuführungseinheit BSZ-2 hinzu, bevor die Weiterleitung dann in Produktionsrichtung PR1 stattfindet. In diesem Fall bleiben die weiteren Elemente im Buchkanal 200 unbenutzt resp. sie sind ausser Betrieb gesetzt.

Figur 4 zeigt eine zweite Produktionsvariante, bei welcher der Endbuchblock aus einem ersten Teilbuchblock ZTM-1-a besteht, welcher von dem ersten ZTM-Anleger ZTM-1 beigestellt wird. Gestapelt wird dieser dann subsequent mit einem zweiten Teilbuchblock BSZ-2-a aus der zweiten Bogenstapelzuführung BSZ-2, bevor die Weiterleitung dann in Produktionsrichtung PR1 stattfindet. In diesem Fall bleiben wiederum die weiteren Elemente im Buchkanal 200 unbenutzt resp. sie sind ausser Betrieb gesetzt.

Figur 5 zeigt eine dritte Produktionsvariante, bei welcher der Endbuchblock aus einem ersten Teilbuchblock BSZ-1-a besteht, welcher von der ersten Bogenstapelzuführungseinheit BSZ-1 beigestellt wird. Gestapelt wird dieser dann subsequent mit einem zweiten Teilbuchblock ZTM-2-a aus einer zweiten Zuführungseinrichtung ZTM-2, welche unmittelbar dem vorangehenden ZTM-Anleger ZTM-1 folgt. Der nun so gebildete Endbuchblock wird dann in Produktionsrichtung PR2 weitergeleitet, wobei diese Weiterleitung ein anderes Ziel haben kann, also nicht zwingend die Bearbeitungsmaschine BM, wie dies normalerweise der Fall ist, wenn die Weiterleitung in Produktionsrichtung mit PR1 gekennzeichnet ist. Bei dieser Produktionsvariante ist dann immer noch möglich, dass ein Teilbuchblock BSZ-2-a aus der zweiten Bogenstapelzuführungseinheit BSZ-2 eigenständig in Produktionsrichtung PR1 weitergeleitet wird. Auch in diesem Fall bleiben die übrigen Elemente im Buchkanal 200 unbenutzt, resp. sie sind ausser Betrieb gesetzt.

Figur 6 zeigt eine vierte Produktionsvariante, bei welcher der Endbuchblock aus einem ersten Teilbuchblock BSZ-1-a besteht, welcher von der ersten Bogenstapelzuführungseinheit BSZ-1 beigestellt wird. Gestapelt wird dieser dann subsequent mit einem zweiten Teilbuchblock ZTM-2-a aus einer zweiten Zuführungseinrichtung ZTM-2, welche unmittelbar dem vorangehenden ZTM-Anleger ZTM-1 folgt. Dieser Endbuchblock wird dann in Produktionsrichtung PR1 weitergeleitet. Auch in diesem Fall bleiben die übrigen Elemente im Buchkanal 200 unbenutzt, resp. sie sind ausser Betrieb gesetzt.

Figur 7 zeigt eine fünfte Produktionsvariante, bei welcher der Endbuchblock lediglich aus einem Teilbuchblock BSZ-2-a besteht, welcher von der zweiten der Bogenstapelzuführungseinheit BSZ-2 beigestellt wird, um dann in Produktionsrichtung PR1 weitergeleitet zu werden. Auch in diesem Fall bleiben die übrigen Elemente im Buchkanal 200 unbenutzt, resp. sie sind ausser Betrieb gesetzt.

Figur 8 zeigt das Innenleben eines Trennelements TE-1 in Betrieb. Der über die erste Überführungsstrecke UEF-1 mit einem an einer Fingerkette 500 angeordneten Mitnehmerfinger 500' transportierte Teilbuchblock BB wird rechtzeitig von dem nächstankommenden Mitnehmerfinger 501' des Trennelements TE-1 übernommen und gezielt über die zur Verfügung stehende Strecke stossend weitergeführt, bis dieser Teilbuchblock in den Herrschaftsbereich der nächstangeordneten Überführungsstrecke UEF-2 eindringt. Hier wird er dann von den zu dieser Überführungsstrecke UEF-2 gehörenden und an einer Fingerkette 502 angeordneten Mitnehmerfingern 502' übernommen und weiter transportiert.

Sonach, diese Mitnehmerfinger 501' sind drehbar und in einer Umlaufrichtung UF bewegbar an einer Fingerkette 501 gelagert, und sie verlaufen dann, insbesondere im Bereich des Teilbuchblocks oder Buchblockprodukts BB, nahezu parallel zu der Produktionsrichtung PR1. Die Länge des einzelnen Mitnehmerfingers 501' ist ab Kanalboden > 150 mm gehalten, wodurch sich hohe Umfangsgeschwindigkeiten beim Abschwenken ergeben. Es soll des Weiteren vorgesehen werden, dass sich im Buchkanal 200 möglichst kleine Beabstandungen zwischen den transportierten Buchblocks ergeben, damit diese sich nicht verschieben können.

Das zweite oder letzte Trennelement TE-2 funktioniert analog, nur dass die nicht weiter dargestellten Mitnehmerfinger 501' dann horizontal geführt werden, also nicht mehr stehend wie dies bei dem ersten Trennelement TE-1 der Fall ist und aus Figur 2 hervorgeht, dies weil im zweiten oder letzten Trennelement TE-2 die Buchblockprodukte stehend auf den Buchrücken ankommen und auch so weiter befördert werden.

Es kann allenfalls vorgesehen werden, dass die Mitnehmerfinger 501' aufklappbar gestaltet werden, damit sie sowohl bei Trennelement TE-1 als auch bei Trennelement TE-2 zum Einsatz kommen.

## Patentansprüche

1. Trennelement für den Betrieb einer Transporteinrichtung (100), welche für die Stapelung mehrerer Teilbuchblocks zur Bildung eines Buchblocks (BB) entlang eines zur Transporteinrichtung (100) gehörenden Buchkanals (200) ausgebildet ist, wobei der fertig gestapelte Buchblock anschliessend einer Bearbeitungsmaschine (BM) zuführbar ist, **dadurch gekennzeichnet, dass** der Buchkanal (200) aus mindestens einer Überführungsstrecke (UEF-1, UEF-2, UEF-3) besteht, dass mindestens ein erstes Trennelement (TE-1) innerhalb der Transporteinrichtung (100) als Bindeglied zwischen einer vorangehend angeordneten Überführungsstrecke (UEF-1) und einer nachgeordneten Überführungsstrecke (UEF-2) angeordnet ist, dass das mit mindestens einem Antrieb betreibbare erste Trennelement (TE-1) ein Mittel aufweist, welches einen von der vorangehenden Überführungsstrecke (UEF-1) flach zugeführten Teilbuchblock übernimmt, diesen flach über die von dem ersten Trennelement (TE-1) gebildete Förderungsstrecke weitertransportiert, diesen anschliessend flach und taktkonform an die nachgeschaltete Überführungsstrecke (UEF-2) übergibt.

2. Trennelement für den Betrieb einer Transporteinrichtung (100), welche für die Stapelung mehrerer Teilbuchblocks zur Bildung eines Buchblocks (BB) entlang eines zur Transporteinrichtung (100) gehörenden Buchkanals (200) ausgebildet ist, wobei der fertig gestapelte Buchblock anschliessend einer Bearbeitungsmaschine (BM) zuführbar ist, **dadurch gekennzeichnet, dass** der Buchkanal (200) aus mindestens einer Überführungsstrecke (UEF-1, UEF-2, UEF-3) besteht, dass mindestens ein zweites Trennelement (TE-2) innerhalb der Transporteinrichtung (100) als Bindeglied zwischen einer vorangehend angeordneten Überführungsstrecke (UEF-2) und einer nachgeordneten Überführungsstrecke (UEF-3) angeordnet ist, dass das mit mindestens einem Antrieb betreibbare zweite Trennelement (TE-2) ein Mittel aufweist, welches ein von der vorangehenden Überführungsstrecke (UEF-2) stehend zugeführte Buchblockprodukt übernimmt, dieses über die von dem zweiten Trennelement (TE-2) gebildete Förderungsstrecke stehend weitertransportiert, dieses anschliessend stehend und taktkonform an die nachgeschaltete Überführungsstrecke (UEF-3) übergibt.

3. Trennelement nach Anspruch 1 oder 2, **dadurch gekennzeichnet, dass** die Trennelemente (TE-1, TE-2) dependent von anderen Zuführungen oder autonom betreibbar sind.

4. Trennelement nach Anspruch 1 oder 2, **dadurch gekennzeichnet, dass** mindestens die Überführungsstrecken (UEF-1, UEF-2, UEF-3) zueinander segmentiert betreibbar sind.

5. Trennelement nach den Ansprüchen 1 und/oder 2, **dadurch gekennzeichnet, dass** Überführungsstrecken (UEF-1, UEF-2, UEF-3) und Trennelemente (TE-1, TE-2) entlang ihrer Förderungsstrecken als Mittel für den Transport der Teilbuchblocks eine integral durchgehende oder segmentierte Fingerkette (500, 501, 502) aufweisen.

6. Trennelement nach Anspruch 5, **dadurch gekennzeichnet, dass** die Fingerkette (500, 501, 502) Mitnehmerfinger (500', 501', 502') aufweist, welche entlang der flach geführten Teilbuchblocks eine vertikale oder quasi-vertikale Ausrichtung einnehmen, und welche entlang der stehend geführten Buchblockprodukte eine horizontale oder quasi-horizontale Ausrichtung einnehmen.

7. Trennelement nach einem oder mehreren der Ansprüche 1 bis 6 , **dadurch gekennzeichnet, dass** die in Produktionsrichtung (PR1) nachgeordnete Überführungsstecke (UEF-2) gegenüber einer letzten Bogenstapelzuführungseinheit (BSZ-2) eine Überleitungsstrecke (ULS) aufweist, innerhalb welcher das dort geführte Buchblockprodukt von einem flach liegenden zu einem stehend geführten Transport überführbar ist.

8. Trennelement nach Anspruch 1 oder 2, **dadurch gekennzeichnet, dass** das zweite Trennelement (TE-2) innerhalb der Transporteinrichtung (100) dem ersten Trennelement (TE-1) nachgeschaltet ist, und dass das zweite oder letzte Trennelement (TE-2) der Bearbeitungsmaschine (BM) vorgeschaltet ist.

9. Trennelement nach Anspruch 1 oder 2, **dadurch gekennzeichnet, dass** die Förderung der zu stapelnden Teilbuchblocks oder des fertig gestapelten Buchblockprodukts über das erste und/oder zweite Trennelement (TE-1, TE-2) taktmässig monoton, synchron oder diskontinuierlich gegenüber dem Takt der den Trennelementen (TE-1, TE-2) vorangehenden und nachfolgenden Überführungsstrecken (UEF-1, UEF-2, UEF-3) durchführbar ist.

10. Trennelement nach einem oder mehreren der vorangehenden Ansprüche, **dadurch gekennzeichnet, dass** mindestens eine Überführungsstrecke (UEF-1, UEF-2, UEF-3) der Transporteinrichtung (100), welche vorangehend oder nachgeschaltet eines Trennelements (TE1, TE-2) wirkt, mit mindestens einer Bogenstapelzuführungseinheit (BSZ-1, BSZ-2) und/oder mindestens einem ZTM-Anleger (ZTM-1) für die Zuführung mindestens eines stapelbildenden Teilbuchblocks bestückt ist.

11. Trennelement nach Anspruch 1 oder 2, **dadurch gekennzeichnet, dass** die Zuführung des zu stapelnden Teilbuchblocks gegenüber der Überführungsstrecke (UEF-1, UEF-2, UEF-3) vertikal und/oder seitlich gegenüber der Produktionsrichtung (PR1) im Buchkanal (200) der Transporteinrichtung (100) durchführbar ist.

12. Trennelement nach Anspruch 11, **dadurch gekennzeichnet, dass** die seitliche Zuführung des jeweils zu stapelnden Teilbuchblocks durch Steuerungsprofile steuerbar ist, dergestalt, dass diese Steuerungsprofile bei Bedarf fortlaufend eingreifen, um eine angepasste Höhenverstellung eines mit einer Bogenstapelzuführungseinheit (BSZ-1, BSZ-2) in Wirkverbindung stehenden Bogenstapelzuführungstisches (BSZT) gegenüber der vorhandenen Höhe des sich in der Überführungsstrecke (UEF-1, UEF-2, UEF-3) flach befindlichen Teilbuchblocks zu bewerkstelligen.

13. Trennelement nach Anspruch 12, **dadurch gekennzeichnet, dass** bei dem höhenverstellbaren, mit der Bogenstapelzuführungseinheit (BSZ-1, BSZ-2) in Wirkverbindung stehenden Bogenstapelzuführungstisch (BSZT) drei verschiedene Betriebsarten zu Grunde gelegt sind, nämlich:
a) dass sich der Bogenstapelzuführungstisch (BSZT) bei einem Durchlassbetrieb in der obersten Position befindet;
b) dass sich der Bogenstapelzuführungstisch (BSZT) bei einem Einlege-Betrieb in der untersten Position befindet;
c) dass die Höhe des Bogenstapelzuführungstisches (BSZT) bei einem Zulege-Betrieb an die Höhe des ankommenden Teilbuchblocks angepasst wird.

14. Trennelement nach den Ansprüchen 11 oder 12, **dadurch gekennzeichnet, dass** die Zuführung des jeweils zu stapelnden Teilbuchblocks von der Bogenstapelzuführungseinheit (BSZ-1, BSZ-2) und/oder von einem ZTM-Anleger zu der Überführungsstrecke unter einer Neigungsinterdependenz zwischen den Aggregaten durchführbar ist.

15. Trennelement nach Anspruch 1 oder 2, **dadurch gekennzeichnet, dass** mindestens der flachtransportierte Teilbuchblock innerhalb mindestens einer Überführungsstrecke (UEF-1, UEF-2) unter einer Neigung von bis zu 30°, vorzugsweise 20° ± 5°, vorzugsweise bis 10° beförderbar ist.

16. Trennelement nach Anspruch 1 oder 2, **dadurch gekennzeichnet, dass** der durch den Antrieb gesteuerte Transport des Teilbuchblocks entlang der im Trennelement abgesteckten Förderungsstrecke mit unterschiedlichen Geschwindigkeitsprofilen betreibbar ist.

17. Trennelement nach einem der Ansprüche 1-16, **dadurch gekennzeichnet, dass** die Transporteinrichtung (100) über alle oder optional nur einen Teil der operativ wirkenden Überführungsstrecken (UEF-1, UEF-2, UEF-3), Trennelemente (TE-1, TE-2), Bogenstapelzuführungseinheiten (BSZ-1, BSZ-2), und ZTM-Anleger (ZTM-1) betreibbar ist.

18. Trennelement nach einem der Ansprüche 1-17, **dadurch gekennzeichnet, dass** weitere Steuerungsprofile die Elemente der Transporteinrichtung (100) so steuern, dass sie eine intermediäre beliebige Umleitung eines Teilbuchblocks aus einer Überführungsstrecke (UEF-1, UEF-2, UEF-3), einer Bogenstapelzuführungseinheit (BSZ-1, BSZ-2), eines ZTM-Anlegers (ZTM-1), eines Trennelements (TE-1, TE-2) steuern.

19. Verfahren zum Betrieb einer Transporteinrichtung (100) nach Anspruch 1 oder 2, **dadurch gekennzeichnet, dass** die Transporteinrichtung (100) aus mindestens folgenden Elementen gebildet ist: i) aus einer ersten Überführungsstrecke (UEF-1), welche in Wirkverbindung mit einer ersten Bogenstapelzuführungseinheit (BSZ-1) und einem ersten ZTM-Anleger (ZTM-1) betrieben wird; ii) aus einem ersten Trennelement (TE-1), das nach der ersten Überführungsstrecke (UEF-1) operiert; iii) aus einer dem ersten Trennelement (TE-1) folgenden zweiten Überführungsstrecke (UEF-2), welche in Wirkverbindung mit einer zweiten Bogenstapelzuführungseinheit (BSZ-2) betrieben wird; iv) aus einem zweiten Trennelement (TE-2), das nach der zweiten Überführungsstrecke (UEF-2) operiert; v) aus einer dritten Überführungsstecke (UEF-3), deren Infrastruktur zur Beschickung einer anschliessenden Bearbeitungsmaschine (BM) ausgelegt ist.

20. Verfahren nach Anspruch 19, **dadurch gekennzeichnet, dass** die Transporteinrichtung (100) über alle oder optional nur einen Teil der Elemente betrieben wird.

21. Verfahren nach Anspruch 19, **dadurch gekennzeichnet, dass** mindestens die zweite oder letzte Überführungsstrecke (UEF-2, UEF-3), welche vordem zweiten oder letzten Trennelement (TE-2) angeordnet ist, mindestens eine Überleitungsstrecke (ULS) aufweist, welche die Überführung des Buchblockprodukts von einer flachen in eine senkrechte Lage vornimmt.
